# EUROPÄISCHE PATENTSCHRIFT

(11) **EP 3 602 584 B1**
(45) Veröffentlichungstag und Bekanntmachung des Hinweises auf die Patenterteilung: **17.03.2021**
(21) Anmeldenummer: 18717828.0
(22) Anmeldetag: 28.03.2018
(51) Int. Cl.: H01F 41/04, H02K 15/04, H01B 13/00, B22C 9/22

(54) **ELEKTROTECHNISCHE SPULE, VERFAHREN ZU DEREN HERSTELLUNG SOWIE ELEKTROMAGNET ODER ELEKTROMASCHINE MIT WENIGSTENS EINER SOLCHEN SPULE**
ELECTROTECHNICAL COIL, METHOD FOR PRODUCING SAME, AND ELECTROMAGNET OR ELECTRIC MACHINE COMPRISING AT LEAST ONE SUCH COIL
BOBINE ÉLECTROTECHNIQUE, PROCÉDÉ POUR LA FABRICATION DE CELLE-CI AINSI QU'ÉLECTROAIMANT OU MACHINE ÉLECTRIQUE COMPRENANT AU MOINS UNE TELLE BOBINE

(30) Priorität: 31.03.2017 DE 102017205544
(43) Veröffentlichungstag der Anmeldung: 05.02.2020
(73) Patentinhaber: Fraunhofer-Gesellschaft zur Förderung der angewandten Forschung e.V., 80686 München (DE)
(72) Erfinder: BERGMANN, Markus, 09350 Lichtenstein (DE); BACH, Mirko, 09112 Chemnitz (DE); HEUSER, Michael, 28205 Bremen (DE); WERNER, Markus, 09127 Chemnitz (DE); LINNEMANN, Maik, 09126 Chemnitz (DE); WÖSTMANN, Franz-Joseph, 48163 Münster (DE)
(74) Vertreter: Grünecker Patent- und Rechtsanwälte PartG mbB
(86) Internationale Anmeldenummer: PCT/EP2018/000134
(87) Internationale Veröffentlichungsnummer: WO 2018/177596

(56) Entgegenhaltungen:
- EP-A2- 2 387 135
- EP-A2- 2 688 183
- JP-A- 2005 310 566
- JP-A- 2015 002 614

## Beschreibung

Die vorliegende Erfindung betrifft eine elektrotechnische Spule, ein Verfahren zu deren Herstellung sowie einen Elektromagnet oder eine Elektromaschine mit wenigstens einer solchen Spule. Insbesondere betrifft die vorliegende Erfindung die umformende Kalibrierung von gießtechnisch hergestellten elektrotechnischen Spulen aus stromleitenden Werkstoffen mit Ausformschrägen in einem kombinierten Verfahren.

Bislang werden Spulen häufig aus Draht (Rundprofil, Rechteckprofil) gewickelt, was aufgrund der Leiterform zur mangelnden Raumnutzung (Nutfüllfaktor) speziell bei konisch ausgeführten Spulen führt. Eine wesentliche geometrische Einschränkung liegt im Stand der Technik in den beschränkten Möglichkeiten zum Einsatz unterschiedlicher Windungsquerschnitte: Selbst bei optimaler Ausnutzung verbleibt bei der Verwendung von Runddrähten für die Wicklungen ein nicht nutzbarer Zwischenraum zwischen den einzelnen Wicklungen. Auch die notwendige Isolation, die Drahteinführung und die diskrete Verteilung der Leiter begrenzen den Füllfaktor. Da der letztendlich erzielte Nutfüllfaktor zudem bei der elektromagnetischen Auslegung nur geeignet geschätzt und aufgrund der Unkenntnis der späteren tatsächlichen Ausführung des Motors nicht berechnet werden kann, werden die Motoren aufgrund der höheren notwendigen Massen (Kupfer der Wicklungen und Blechpakete des Stators und des Rotors) tendenziell (zu) schwer und (zu) groß.

Im Vergleich zu gewickelten Spulen mit Runddraht oder Rechteckdraht ermöglichen gießtechnisch hergestellte Spulen aufgrund der hohen geometrischen Gestaltungsfreiheit eine enorme Erhöhung des Nutfüllfaktors. Zusätzlich zeigt die Geometrie der Gussspulen ein deutlich verbessertes Entwärmungsverhalten.

Ein Verfahren zur Herstellung einer elektrotechnischen Spule in Gusstechnik ist aus der EP 2 387 135 A2 bekannt.

Gemäß der EP 2 387 135 A2 hängt die erreichbare Drehmomentdichte permanenterregter Synchronmaschinen mit Zahnspulenwicklung maßgeblich von dem Verhältnis von gesamter Kupferquerschnittsfläche zu Nutfläche, dem sogenannten Nutfüllfaktor, ab. Eine Erhöhung des Füllfaktors ermöglicht bei gleichbleibendem Drehmoment einen flacheren Aufbau des Stators oder eine Verbreiterung der Zähne zur Entlastung des Magnetkreises.

Bislang wurden Gussspulen in einem Feingussprozess unter Einsatz von verlorenen gespritzten Wachsmodellen und verlorenen Formen gießtechnisch hergestellt. Hierbei sind die Spritzwerkzeuge durch aufwendige Formkonzepte so klein wie möglich gehalten worden. Dies führte jedoch zu einem erheblichen Mehraufwand bei der Auslegung der Gießwerkzeuge und machte den Prozess störanfällig. Fertigungsbedingt sind an Gussteilen jedoch Zwischenräume zwischen den Windungen zur Entformung vorzusehen. Diese führen bei gegossen Spulen zu Reduzierung des Nutfüllfaktors und wirken sich negativ auf die Entwärmung aus.

Zusammenfassend lässt sich feststellen, dass mit den heute üblichen Verfahren der Herstellung von Spulenwicklungen technische und wirtschaftliche Grenzen der Nutfüllung mit einzelnen Windungen bestehen. Ein Nutfüllfaktor von 70 % ist bereits ein sehr guter Wert, die technisch wie wirtschaftlich sinnvoll machbaren Grenzen liegen momentan bei ca. 75 % bis 80 % (Quelle: Müller, Vogt, Ponick "Berechnung elektrischer Maschinen", S. 168, 6. Auflage, Wiley-VCH, Weinheim, 2008."). Weiterhin führen die zur Entformung erforderlichen Zwischenräume zwischen den Windungen sowie die Oberflächenqualität der gießtechnisch erzeugten Spulen zur Minderung des Nutfüllfaktors und erheblichen Problemen bei der nachfolgenden Isolierung.

Weitere Beispiele für Verfahren zur Herstellung einer elektrotechnischen Spule sind aus der EP 2 688 183 A2, JP 2015 002614 A und der JP 2005 310566 A bekannt.

Ausgehend vom Stand der Technik ist es die Aufgabe der vorliegenden Erfindung, eine elektrotechnische Spule zum Erzielen eines erhöhten Nutfüllfaktors auf zuverlässige und einfache Art und Weise reproduzierbar und wirtschaftlich herzustellen sowie anzuwenden.

Die Aufgabe der vorliegenden Erfindung wird gelöst durch das Verfahren nach Anspruch 1.

Das erfindungsgemäße Verfahren zur Herstellung einer elektrotechnischen Spule nach Anspruch 1 umfasst die Schritte:
- Schritt A: Gießen einer elektrotechnischen Spule mit wenigstens einer um eine Spulenachse verlaufenden Windung, wobei sich der Querschnitt der wenigstens einen Windung bezüglich der Spulenachse in radialer Richtung nach innen oder nach außen verjüngt.
- Schritt B: Umformung der Spule unter Veränderung des Querschnitts der wenigstens einen Windung, sodass der Flächenschwerpunkt des Querschnitts der wenigstens einen Windung bezüglich der Spulenachse wenigstens teilweise in radialer Richtung verlagert wird.

Das erfindungsgemäße Verfahren nutzt die Vorteile der umformenden Herstellung und erzielt dabei keinen oder nur wenig Materialverlust. Konkret kann die in Schritt A gießtechnisch hergestellte Spule zur erleichterten Entformung mit großwinkligen Ausformschrägen versehen werden, weil die Ausformschrägen im nachgelagerten Schritt B zur plastischen Umformung der Spule unter Verlagerung des Flächenschwerpunkts des Querschnitts der Windungen in radialer Richtung verringert oder vollständig eliminiert werden können. Dabei wird die Spule entlang der Spulenachse gestaucht und die Windungen der Spule werden zusammengedrückt, sodass das Spulenmaterial in radialer Richtung verdrängt wird und der Flächenschwerpunkt des Querschnitts der Windungen wenigstens teilweise in radialer Richtung bezüglich der Spulenachse verschoben wird. Dabei ist auch eine Verschiebung des Flächenschwerpunkts teilweise in axialer Richtung möglich. Ausformschrägen in großen Winkeln vereinfachen die Entnahme aus der Gussform. Beim Einsatz von wirtschaftlichen Massenfertigungsverfahren wie bspw. dem Druckgießen, sollten Ausformschrägen von mindestens 1.5° vorgesehen werden, die bei kurzen Entformungswegen auch kleiner ausfallen können. Vorzugsweise wird die Spule im Zuge der Umformung in die endgültige Kontur gebracht (kalibriert). Damit einhergehend ist die Vereinfachung von urformenden Prozessketten wie Gießen durch den Wegfall von Vorbereitungs-, Fertigungs- und Bearbeitungsschritten. Weiterhin kann die Oberflächenqualität im Nachgang durch den Umformprozess eingestellt werden, wodurch die Qualitätsanforderungen an den Gießprozess sinken und die Prozessrobustheit steigt.

Vorteilhafte Weiterbildungen der Erfindung sind Gegenstände der Unteransprüche.

Es kann von Vorteil sein, wenn Schritt A wenigstens einen der folgenden Teilschritte aufweist:
- Schritt A1: Bereitstellung einer vorzugsweise wiederverwendbaren Negativform, bevorzugt durch Einbettung eines Positivmodells in einem Einbettmedium, beispielsweise aus Sand oder aus metallischem Material, wobei besonders bevorzugt das Positivmodell nach einem Abdruck in dem Einbettmedium wieder entfernt wird oder als verlorene Form in dem Einbettmedium zurückbleibt. Die Wiederverwendbarkeit der Negativform verringert den Herstellungsaufwand im Hinblick auf Zeit und Kosten.
- Schritt A2: Gießen des Spulenmaterials in die Negativform, vorzugsweise gravitations- und/oder druckunterstützt, bevorzugt bei Beaufschlagung der Negativform mit Unterdruck und/oder in einer Schutzgasatmosphäre, besonders bevorzugt im Feinguss, Schleuderguss, Vakuumguss oder Niederdruckguss. Bedingt durch diese Maßnahmen kann der Einschluss von Poren oder Partikeln im gegossenen Spulenmaterial verringert oder gar vollständig verhindert werden.
- Schritt A3: Aushärten des gegossenen Spulenmaterials in der Negativform. Die Aushärtung erfolgt vorzugsweise durch (passive) Abkühlung der Negativform und des darin enthaltenen Spulenmaterials.
- Schritt A4: Entnahme der Spule aus der Negativform. Zu diesem Zweck ist die Negativform vorzugsweise mehrteilig ausgebildet und kann geöffnet werden.
- Schritt A5: Säuberung der Spule. Bei diesem Schritt können Reste eines vorhandenen Einbettmediums entfernt werden.
- Schritt A6: Weichglühen der Spule. Diese Maßnahme kann die Umformung und ggf. Kalibrierung der Spule im nachgelagerten Schritt B erleichtern.
- Schritt A7: Elektrische Isolation der wenigstens einen Windung der Spule, vorzugsweise durch Eintauchen der Spule in Isolationslack (z.B. im CVD- oder PVD-Prozess) oder durch Beschichtung oder durch Ummantelung mit einer Isolationsschicht. Durch diesen Schritt werden die einzelnen Windungen der Spule elektrisch voneinander getrennt.

Die Reihenfolge der Teilschritte ist vorzugsweise wie angegeben, kann aber auch in einer beliebigen Weise geändert werden, soweit das Verfahren mit der geänderten Abfolge von Teilschritten technisch ausführbar ist.

Es kann aber auch nützlich sein, wenn Schritt B wenigstens einen der folgenden Teilschritte aufweist:
- Schritt B1: Bereitstellen eines mehrteiligen Umformwerkzeugs, das in einem zusammengesetzten Zustand eine Kavität zur Aufnahme der Spule bildet, wobei die Kavität vorzugsweise auf die Innenkontur und/oder die Außenkontur der Spule abgestimmt ist, wobei bevorzugt ein (konischer und/oder rotationssymmetrischer) Stempel ein Oberteil des Umformwerkzeugs bildet und/oder ein (konisches und/oder rotationssymmetrisches) Gesenk ein Unterteil des Umformwerkzeugs bildet.
- Schritt B2: Anordnen der Spule im Umformwerkzeug, vorzugsweise derart, dass die Spule radial innenseitig und/oder radial außenseitig am Umformwerkzeug anliegt, wobei bevorzugt die Spule radial innenseitig am Stempel anliegt und/oder radial außenseitig am Gesenk anliegt.
- Schritt B3: Bewegen wenigstens zweier Teile des mehrteiligen Umformwerkzeugs relativ zueinander entlang der Spulenachse unter Verringerung des Volumens der Kavität, wobei vorzugsweise der Stempel entlang der Spulenachse in das Gesenk einfährt.
- Schritt B4: Umformen der Spule durch Stauchen der Spule entlang der Spulenachse, wobei vorzugsweise die Windungen der Spule radial innenseitig beginnend gegeneinander gedrückt
- werden, sodass das Spulenmaterial bezüglich der Spulenachse in radialer Richtung nach außen verdrängt wird, bevorzugt derart, dass die Zwischenräume zwischen den Windungen verringert oder eliminiert werden.
- Schritt B5: Veränderung des Querschnitts der wenigstens einen Windung, vorzugsweise während des Schrittes B4, sodass sich ein Winkel, den die Oberseite und/oder die Unterseite des Querschnitts mit einer die Spulenachse senkrecht schneidenden Ebene einschließt, um wenigstens 1°; 1.5°, 2°, 2.5°, 3°, 4° oder 5° gegenüber dem unverformten Zustand verändert und/oder verringert.
- Schritt B6: Abtrennen eines Angusses der Spule.
- Schritt B7: Formen wenigstens eines Anschlussbereichs für eine elektrische Kontaktierung der Spule, vorzugsweise durch Prägung.
- Schritt B8: Kalibrieren der Spule auf Endkontur, wobei bevorzugt das Umformwerkzeug die Spule radial innenseitig und/oder radial außenseitig und/oder am oberen und/oder unteren axialen Ende bezüglich der Spulenachse kalibriert, wobei besonders bevorzugt der Stempel die Spule radial innenseitig und/oder am oberen axialen Ende kalibriert und/oder das Gesenk die Spule radial außenseitig und/oder am unteren axialen Ende kalibriert.
- Schritt B9: Elektrische Isolation der wenigstens einen Windung der Spule, vorzugsweise durch Eintauchen der Spule in Isolationslack (z.B. im CVD- oder PVD-Prozess) oder durch Beschichtung oder durch Ummantelung mit einer Isolationsschicht.

Die Reihenfolge der Teilschritte ist vorzugsweise wie angegeben, kann aber auch in einer beliebigen Weise geändert werden, soweit das Verfahren mit der geänderten Abfolge von Teilschritten technisch ausführbar ist.

Die gemäß den Schritten B1 bis B9 vorgeschlagenen und optionalen Maßnahmen können die Umformung und Kalibrierung der Spule unter Eliminierung von Oberflächenunebenheiten und Verdichtung des Spulenmaterials begünstigen.

Es kann sinnvoll sein, wenn der Querschnitt der wenigstens einen Windung der in Schritt A gegossenen Spule vorzugsweise polygonal und/oder konisch und/oder trapezförmig, bevorzugt gleichschenklig polygonal und/oder konisch und/oder trapezförmig ist. Bei dieser Ausführung können Ausformschrägen vorgesehen werden, während die nachfolgende Umformung in Schritt B zusätzlich begünstigt wird.

Es kann sich als vorteilhaft erweisen, wenn der Winkel, den die Oberseite und/oder die Unterseite des Querschnitts der wenigstens einen Windung der in Schritt A gegossenen Spule mit einer die Spulenachse senkrecht schneidenden Ebene einschließt, wenigstens 1°; 1.5°, 2°, 2.5°, 3°, 4° oder 5° beträgt. Derartige Ausformschrägen begünstigen den Einsatz von wirtschaftlichen Massenfertigungsverfahren wie bspw. dem Druckgießen.

Es kann aber auch praktisch sein, wenn die Innenkontur und/oder die Außenkontur der nach Schritt A und/oder nach Schritt B erhaltenen Spule der Mantelfläche eines Zylinders, Quaders, Kegelstumpfs oder Pyramidenstumpfs entspricht/entsprechen. Spulen mit derartigen Innen- und/oder Außenkonturen sind im Zusammenhang mit Elektromagneten und Elektromaschinen, insbesondere Drehstrom-Synchronmaschinen in entsprechenden Statornuten besonders vorteilhaft einsetzbar.

Es kann sinnvoll sein, wenn die elektrotechnische Spule in Schritt B derart umgeformt wird, dass sie wenigstens 95% des Volumens eines Körpers mit gleicher Innen- und Außenkontur einnimmt. Bei dieser Ausführung kann beim Einsatz der Spule im Bereich von Elektromaschinen eine hohe Drehmomentdichte erreicht werden.

Es kann von Vorteil sein, wenn der Flächenschwerpunkt des Querschnitts der wenigstens einen Windung in Schritt B in radialer Richtung nach innen oder nach außen bezüglich der Spulenachse verlagert wird. Diese Verlagerung von Spulenmaterial dient in vorteilhafter Weise der Verringerung oder Eliminierung von Ausformschrägen und damit der Erhöhung des Nutfüllfaktors bzw. der mit der Spule erzielbaren Drehmomentdichte.

Weitere vorteilhafte Weiterbildungen der vorliegenden Erfindung ergeben sich durch beliebige Kombinationen der in den Ansprüchen, Figuren sowie der Beschreibung offenbarten Merkmale.

### Begriffe und Definitionen

### Elektrotechnische Spule

Im Rahmen der vorliegenden Erfindung wird unter einer Spule ein Bauelement der Elektrotechnik verstanden: Erfindungsgemäße Spulen sind somit für beliebige Anwendungen in der Elektrotechnik, beispielsweise im Elektromaschinenbau, insbesondere im Elektromotoren- und Elektrogeneratorenbau, geeignet. Erfindungsgemäße Spulen werden nachfolgend somit auch als elektrotechnische Spulen bezeichnet.

Solche Spulen sind eines der wichtigsten Bauelemente der Elektrotechnik. Sie übernehmen verschiedenste Funktionen in elektrischen Schaltungen und elektromechanischen Anwendungen. Im Bereich des Elektromaschinenbaus sind Spulen ein wesentliches funktionales Bauelement des Motors. Je nach Klasse und Bauform des Motors weisen die Spulen unterschiedliche Geometrien, Wickelformen und Windungszahlen auf.

Der Radius und/oder die Steigung und/oder die Querschnittsform und/oder die Querschnittsfläche der wenigstens einen Windung der Spule ist vorzugsweise über wenigstens einen mittleren Abschnitt zwischen den axialen Endabschnitten der Spule oder über die gesamte Spule konstant. Die Anzahl der Windungen ist beliebig wählbar.

Die Spule wird vorzugsweise aus einem gießfähigen, elektrisch leitenden Material wie Aluminium, Silber, Kupfer oder einer Legierung hergestellt.

Die Spule ist vorzugsweise gerade, konvex, konkav, konisch, rotationssymmetrisch oder nichtrotationssymmetrisch ausgebildet.

Die elektrotechnische Spule ist beispielsweise nach dem in der EP 2 387 135 A2 beschriebenen Verfahren hergestellt, insbesondere nach dem Verfahren gemäß einem der Ansprüche 1 bis 6 der EP 2 387 135 A2, oder ist eine elektrotechnische Spule, die in der EP 2 387 135 A2 beschrieben ist, insbesondere eine elektrotechnische Spule gemäß einem der Ansprüche 7 bis 12 der EP 2 387 135 A2.

### Umformung

Der Begriff Umformung ist als plastische Umformung zu verstehen, soweit nicht explizit etwas anderes erwähnt wird.

### Kalibrierung

Der Begriff Kalibrierung bezeichnet die Formgebung der Spule in Endkontur, soweit nicht explizit etwas anderes erwähnt wird. Der Schritt Kalibrieren umfasst vorzugsweise das Verdichten des gegossenen und ausgehärteten Spulenmaterials und/oder das Glätten von Oberflächenunebenheiten und/oder das Trennen des Angusses in einem Prozessschritt.

### Spulenachse

Die Spulenachse ist vorzugsweise die Längsachse der Spule bzw. die Achse, um welche sich die wenigstens eine Windung der Spule herum abwickelt und ist vorzugsweise eine Gerade.

### Querschnitt

Die den Querschnitt der wenigstens einen Windung darstellende Schnittansicht verläuft bzw. liegt vorzugsweise in einer die Spulenachse einschließenden Ebene, soweit nicht explizit etwas anderes erwähnt wird.

### Flächenschwerpunkt

Der Flächenschwerpunkt der Querschnittsform des Strangprofils ist der geometrische Schwerpunkt dieser Querschnittsform. Mathematisch entspricht dies der Mittelung aller Punkte innerhalb der Querschnittsform. Den Flächenschwerpunkt kann man in einfachen Fällen durch geometrische Überlegungen erhalten, oder allgemein mit Mitteln der Mathematik durch Integration berechnen. Zur Beschreibung der Körper werden die Methoden der analytischen Geometrie verwendet.

### Windungsachse

Die Windungsachse entspricht vorzugsweise dem Mittelpunkt der maximalen Außenabmessungen des Querschnitts der wenigstens einen Windung bzw. dem Mittelpunkt des kleinsten Rechtecks, in welches der Querschnitt der wenigstens einen Windung hineinpasst. Bei einer rechteckigen Querschnittsform fällt der Flächenschwerpunkt mit der Windungsachse zusammen. Bei einem dreieckigen oder trapezförmigen Querschnitt ist der Flächenschwerpunkt ausgehend von der Windungsachse jeweils in Richtung der breiteren Seite des Querschnitts versetzt. Die (imaginäre) Windungsachse windet sich schraubenförmig um die (imaginäre) Spulenachse.

### Ausformschräge

Fertigungsbedingt sind an Gussteilen Ausformschrägen vorteilhaft. Art und Größe der Ausformschrägen sind hierbei abhängig vom gewählten Gießverfahren. Diese führen bei gegossen Spulen zu Reduzierung des Nutfüllfaktors und wirken sich negativ auf die Entwärmung aus. Die Ausformschräge entspricht dem Winkel, den die Oberseite und/oder die Unterseite des Querschnitts einer Windung der in Schritt A gegossenen Spule mit einer die Spulenachse senkrecht schneidenden Ebene einschließt.

### Kurze Beschreibung der Zeichnungen

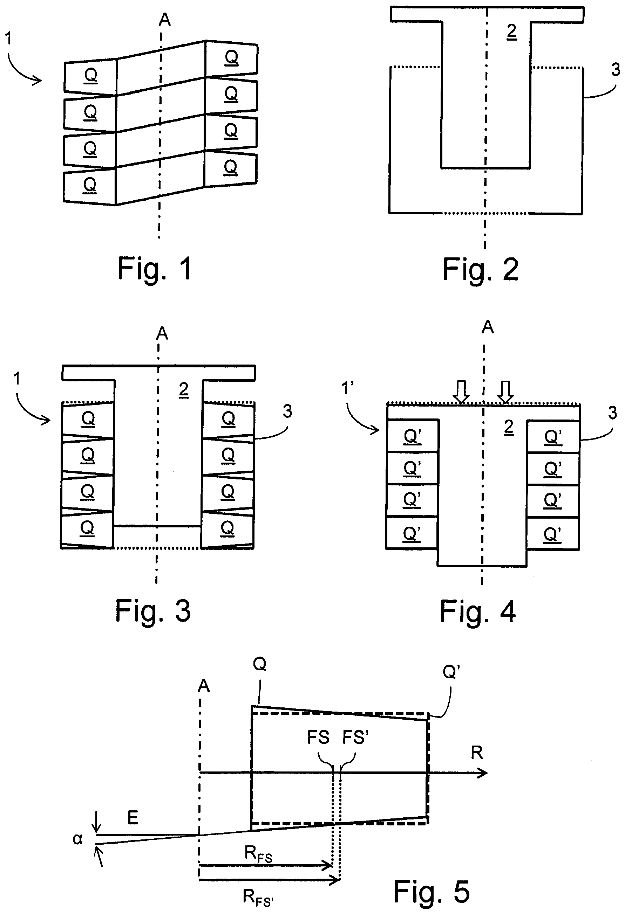

- Fig. 1: zeigt eine schematische Schnittansicht einer gegossenen und ausgehärteten elektrotechnischen Spule mit vier Windungen und konstanter Steigung, wobei sich die Querschnitte der Windungen bezüglich der Spulenachse in radialer Richtung nach außen verjüngen und in Form gleichschenkliger Trapeze ausgebildet sind.
- Fig. 2: zeigt eine schematische Ansicht eines zweiteiligen Presswerkzeugs mit einem rotationssymmetrischen Stempel als Oberteil und einem rotationssymmetrischen Gesenk als Unterteil.
- Fig. 3: zeigt eine schematische Ansicht einer im Presswerkzeug angeordneten und radial innenseitig sowie radial außenseitig vom Presswerkzeug unterstützten elektrotechnischen Spule im Zustand vor der Umformung, wobei die Steigung der Spule zu Darstellungszwecken vernachlässigt ist.
- Fig. 4: zeigt eine schematische Ansicht der im Presswerkzeug angeordneten und radial innenseitig sowie radial außenseitig unterstützten elektrotechnischen Spule im Zustand nach der Umformung, wobei die Querschnitte der Windungen im Wesentlichen rechteckig ausgebildet sind und die Steigung der Spule zu Darstellungszwecken vernachlässigt ist.
- Fig. 5: zeigt in einer schematischen Ansicht die durch Umformung der Spule verursachte Veränderung des Querschnitts der Windung ausgehend von der Form eines gleichschenkligen Trapezes (durchgehende Konturlinie) in eine Rechteckform (gestrichelte Konturlinie) sowie die damit einhergehende Verlagerung des Flächenschwerpunkts des Querschnitts der Windung in radialer Richtung nach außen bezüglich der Spulenachse.

### Detaillierte Beschreibung des bevorzugten Ausführungsbeispiels

Das bevorzugte Ausführungsbeispiel der vorliegenden Erfindung wird nachstehend anhand der beigefügten Figuren im Detail beschrieben. Der Fachmann versteht, dass die im Zusammenhang mit dem Ausführungsbeispiel beschriebenen Merkmale zur Verwirklichung der beanspruchten Erfindung nicht in Vollständigkeit verwirklicht sein müssen, sondern auch unabhängig voneinander in anderen Konfigurationen realisiert werden können. Insbesondere können einzelne der im Ausführungsbeispiel beschriebenen Merkmale weggelassen oder andere Merkmale hinzugefügt werden.

In Vorbereitung des Gießens der Spule 1 in Schritt A erfolgt die Konstruktion der Endgeometrie der elektrotechnischen Spule 1, beispielsweise mittels CAD. In Abhängigkeit des konkreten Anwendungsfalles werden Anzahl, Radius, Steigung, Querschnittsform und Querschnittsfläche der Windungen der Spule ermittelt und die Spulengeometrie im Einbauzustand in Abhängigkeit des verfügbaren Bauraums festgelegt. Es versteht sich, dass Anzahl, Radien, Steigung, Querschnittsform und Querschnittsfläche der Windungen der Spule beliebig verändert werden können, soweit dies nicht im Widerspruch zur beanspruchten Lehre steht. Das beschriebene Ausführungsbeispiel betrifft ein Verfahren zur Herstellung einer elektrotechnischen Spule 1 mit vier um die Spulenachse A verlaufenden Windungen.

Auf Basis der Endgeometrie wird die Gussgeometrie der elektrotechnischen Spule 1 unter simulierter Rückabwicklung der in Schritt B erfolgenden Umformung sowie unter Berücksichtigung von Ausformschrägen sowie Materialschwund konstruiert. Der Abstand der Windungen der Spule 1 wird durch den machbaren Umformgrad, die gießtechnischen Anforderungen und die Art des Isolationsauftrags definiert.

In Schritt A1 des Herstellungsverfahrens erfolgt die Bereitstellung einer wiederverwendbaren Negativform. Dazu wird ein Positivmodell in einem Einbettmedium wie z.B. Sand oder metallischem Werkstoff oder Schüttgut eingebettet, wobei das Positivmodell nach Hinterlassung seines Abdrucks im Einbettmedium wieder entfernt wird oder als verlorene Form im Einbettmedium zurückbleibt.

Das Gießen des Spulenmaterials in die Negativform in Schritt A2 erfolgt gravitations- und vorzugsweise druckunterstützt, z.B. unter einer Schutzgasatmosphäre, während die Negativform ggf. mit Unterdruck beaufschlagt wird. Die erfindungsgemäße Spule 1 kann insbesondere im Feinguss, Schleuderguss, Vakuumguss oder Niederdruckguss hergestellt werden.

Nach dem Aushärten des gegossenen Spulenmaterials in der Negativform (Schritt A3) wird die ausgehärtete und abgekühlte Spule 1 aus der Negativform entnommen (Schritt A4), von Resten des Einbettmediums befreit und gesäubert (Schritt A5) und gegebenenfalls in Vorbereitung der nachfolgenden Umformung in Schritt B weichgeglüht (Schritt A6).

Die elektrische Isolation der Windungen der Spule 1 (Schritt A7) kann wahlweise vor oder nach der in Schritt B erfolgenden Umformung der Spule 1 durchgeführt werden und wird z.B. durch Eintauchen der Spule 1 in Isolationslack, z.B. im CVD- oder PVD-Prozess, oder durch Beschichtung oder durch Ummantelung mit einer Isolationsschicht bewerkstelligt.

Eine schematische Schnittansicht einer beispielhaften elektrotechnischen Spule 1, die in Gusstechnik in Abfolge der Schritte A1 bis A7/A8 hergestellt wurde, ist in Figur 1 dargestellt. Die dargestellte Schnittansicht verläuft dabei entlang der Spulenachse A bzw. in einer Ebene, welche die Spulenachse A einschließt. In der in Figur 1 dargestellten Ansicht umfasst die Spule 1 eine zylindrische Innen- und Außenkontur sowie insgesamt vier Windungen mit konstanter Querschnittsform, wobei die Steigung bzw. der Abstand der Windungen zueinander entlang der Spulenachse A im Einklang mit den gießtechnischen Möglichkeiten auf ein Minimum reduziert ist. Der Querschnitt Q jeder Windung verjüngt sich in radialer Richtung bezüglich der Spulenachse A nach außen und weist die Form eines gleichschenken Trapezes auf, dessen parallele Grundseiten parallel zur Spulenachse A ausgerichtet sind und dessen Innenwinkel jeweils an derselben parallelen Grundseite gleich groß sind.

Figur 5 zeigt in einer durchgehenden Konturlinie die Querschnittsform Q einer Windung der Spule 1 vor der in Schritt B erfolgenden Umformung. Der Winkel a, den jeweils die Oberseite und die Unterseite des Querschnitts Q, der Windung der in Schritt A gegossenen Spule 1 mit einer die Spulenachse A senkrecht schneidenden Ebene E einschließen, beträgt beispielsweise 1.5° und entspricht den Ausformschrägen der Windung. Bezüglich einer Windungsachse, die den Mittelpunkt des kleinsten Rechtecks definiert, in welches der Querschnitt Q der Windung hineinpasst, ist der Flächenschwerpunkt FS des unverformten Querschnitts Q der Windung radial nach innen in Richtung der Spulenachse A versetzt.

Durch die in Schritt B erfolgende Umformung wird der Querschnitt Q' der Windungen der Spule 1 derart verändert, dass der Flächenschwerpunkt FS' des veränderten Querschnitts Q' bezüglich der Spulenachse A in radialer Richtung gegenüber dem Flächenschwerpunkt FS des unveränderten Querschnitts Q verlagert ist.

Dazu wird in Schritt B1 zunächst ein in Figur 2 schematisch dargestelltes, zweiteiliges Umformwerkzeug 2, 3 mit einem rotationssymmetrischen Stempel 2 als Oberteil und einem rotationssymmetrischen Gesenk 3 als Unterteil bereitgestellt. Der Stempel 2 und das Gesenk 3 bilden in einem zusammengesetzten Zustand eine auf die Innen- und Außenkonturen der Spule 1 abgestimmte Kavität zur Aufnahme der Spule 1.

Bei Anordnung der Spule 1 in der Kavität des Umformwerkzeugs 2, 3 (Schritt B2) liegen der Stempel 2 radial innenseitig und das Gesenk 3 radial außenseitig an der Spule 1 an. Dieser Zustand ist in Figur 3 schematisch dargestellt.

Ausgehend von dem in Figur 3 schematisch dargestellten Zustand wird der Stempel 2 in Schritt B3 unter Verringerung des Volumens der Kavität entlang der Spulenachse A bewegt und fährt in das Gesenk 3 ein.

Die plastische Umformung der Spule 1 erfolgt in den Schritten B4 und B5 durch Stauchen der Spule 1 entlang der Spulenachse A. Der Stempel 2 taucht von oben in das Gesenk 3 ein und drückt die konischen Bereiche der Windungen der Spule 1 flach. Die Windungen der Spule 1 werden dabei radial innenseitig beginnend gegeneinander gedrückt, sodass das Spulenmaterial bezüglich der Spulenachse A in radialer Richtung R nach außen verdrängt wird, bis die Zwischenräume zwischen den Windungen verringert oder eliminiert sind. Im Zuge der Umformung wird der Querschnitt Q, Q' der Windungen derart verändert, dass sich der Winkel a, den jeweils die Oberseite und die Unterseite des Querschnitts Q, Q' mit einer die Spulenachse A senkrecht schneidenden Ebene E einschließen, auf 0° reduziert bzw. um 1.5 gegenüber dem unverformten Zustand verringert. Diese Veränderung des Querschnitts Q, Q' der Windung bewirkt, dass der Flächenschwerpunkt FS, FS' des Querschnitts Q, Q' bezüglich der Spulenachse A in radialer Richtung R verlagert wird. Der R_{FS'} Radius des Flächenschwerpunkts FS' nach der Umformung ist größer als der Radius R_{FS} des Flächenschwerpunkts vor Umformung. Der verformte Querschnitt Q' der Windung der Spule 1 nach Schritt B ist in Fig. 5 in einer gestrichelten Linie dargestellt. Durch die in Schritt B erfolgte Umformung wird die Spule 1 derart verdichtet, dass sie wenigstens 95% des Volumens eines Körpers mit gleicher Innen- und Außenkontur einnimmt.

Im Zuge der Umformung kann/können beispielsweise in einem Schritt B6 ein Anguss der Spule 1 abgetrennt werden und/oder in einem Schritt B7 ein Anschlussbereich für eine elektrische Kontaktierung der Spule 1 beispielsweise durch Prägung geformt werden.

In Schritt B8 erfolgt beispielsweise eine Kalibrierung der Spule 1 auf Endkontur, indem der Stempel 2 die Spule 1 radial innenseitig sowie am oberen axialen Ende in die Endkontur formt, während das Gesenk 3 die Spule 1 radial außenseitig sowie am unteren axialen Ende in die Endkontur formt. Im Zuge der Kalibrierung werden Oberflächenunebenheiten glättet.

Soweit nicht schon zuvor durchgeführt, erfolgt in Schritt B9 die elektrische Isolation der Windungen der Spule 1.

Die Wirkungen und Vorteile der Erfindung lassen sich wie folgt zusammenfassen:
Der wichtigste Vorteil ist die Wirtschaftlichkeit der Herstellung von Umformspulen bei geringem Einsatz an Fertigungsmitteln. Außerdem ergeben sich folgende Vorteile:
- Bei der gießtechnischen Erzeugung der Vorform ist die Nutzung wiederverwendbarer Werkzeuge möglich, da größere Ausformschrägen genutzt werden können
- durch kontinuierliche Fertigungsfolge ergibt sich höchste Produktivität
- Verbesserung der Oberflächenqualität für anschließende Beschichtung
- Reduzierung von Restporositäten in der Gussspule
- Erhöhung des Nutfüllfaktors
- zusätzliche Verbesserung des Entwärmungspfads
- Reduzierung der minimal möglichen Windungsdicke gegenüber dem Gießen der Spule in Endkontur
- Einstellung enger geometrischer Toleranzen
- hohe Prozessstabilität
- Kombination mit weiteren Prozessschritten wie dem Abtrennen des Anschnittsystems
- Kombination mit Präge-/Formprozessen der Anschlussbereiche für die elektrische Kontaktierung

Des Weiteren gilt die Erfindung für beschichtete Werkstoffe, bei denen ein anschließender notwendiger Isolationsschritt entfällt.

Die Vorform wird urformend erzeugt. Durch Schliffproben (zerstörende Materialprüfung) an Windungsquerschnitten ist nachweisbar, ob eine Spule oder deren Vorform umformend hergestellt worden ist.

Ein Nachweis für die gießtechnische Herstellung der Vorform ist aufgrund markanter und immer auftretender Fehler (Poren, Oxide, ggf. auch Abschreckgefüge an der Oberfläche) im Gussgefüge feststellbar.

Das Anwendungsgebiet der Erfindung sind Spulen für E-Motoren die in Massenproduktion hergestellt werden. Da elektrische Antriebe und Generatoren einen stetig steigenden Absatz und eine stetig steigende Durchdringung der verschiedenen Branchen aufweisen, sind alle Bereiche vom Automobilbau, Maschinenbau, Schifffahrt, Luftfahrt sowie Consumerbereiche eingschlossen.

### Bezugszeichenliste

- 1: Spule
- 2: Stempel
- 3: Gesenk
- α: Winkel zw. Ober-/Unterseite des Querschnitts und Ebene senkrecht zur Spulenachse
- A: Spulenachse
- E: Ebene senkrecht zur Spulenachse
- FS: Flächenschwerpunkt (vor Umformung)
- FS': Flächenschwerpunkt (nach Umformung)
- Q: Querschnitt der Windung (vor Umformung)
- Q': Querschnitt der Windung (nach Umformung)
- R: Radiale Richtung
- R_{FS}: Radius des Flächenschwerpunkts (vor Umformung)
- R_{FS'}: Radius des Flächenschwerpunkts (nach Umformung)

## Patentansprüche

1. Verfahren zur Herstellung einer elektrotechnischen Spule (1), umfassend die Schritte:
a. Schritt A: Gießen einer elektrotechnischen Spule (1) mit wenigstens einer um eine Spulenachse (A) verlaufenden Windung, wobei sich der Querschnitt (Q, Q') der wenigstens einen Windung bezüglich der Spulenachse (A) in radialer Richtung (R) nach innen oder nach außen verjüngt.
b. Schritt B: Umformung der Spule (1) unter Veränderung des Querschnitts (Q, Q') der wenigstens einen Windung, sodass der Flächenschwerpunkt (FS, FS') des Querschnitts (Q, Q') der wenigstens einen Windung bezüglich der Spulenachse (A) wenigstens teilweise in radialer Richtung (R) verlagert wird.

2. Verfahren nach Anspruch 1, **dadurch gekennzeichnet, dass** Schritt A wenigstens einen der folgenden Teilschritte aufweist:
a. Schritt A1: Bereitstellung einer vorzugsweise wiederverwendbaren Negativform, bevorzugt durch Einbettung eines Positivmodells in einem Einbettmedium, beispielsweise aus Sand oder aus metallischem Material, wobei besonders bevorzugt das Positivmodell nach einem Abdruck in dem Einbettmedium wieder entfernt wird oder als verlorene Form in dem Einbettmedium zurückbleibt.
b. Schritt A2: Gießen des Spulenmaterials in die Negativform, vorzugsweise gravitations- und/oder druckunterstützt, bevorzugt bei Beaufschlagung der Negativform mit Unterdruck und/oder in einer Schutzgasatmosphäre, besonders bevorzugt im Feinguss, Schleuderguss, Vakuumguss oder Niederdruckguss.
c. Schritt A3: Aushärten des gegossenen Spulenmaterials in der Negativform.
d. Schritt A4: Entnahme der Spule (1) aus der Negativform.
e. Schritt A5: Säuberung der Spule (1).
f. Schritt A6: Weichglühen der Spule (1).
g. Schritt A7: Elektrische Isolation der wenigstens einen Windung der Spule (1), vorzugsweise durch Eintauchen der Spule (1) in Isolationslack oder durch Beschichtung oder durch Ummantelung mit einer Isolationsschicht.

3. Verfahren nach einem der vorangehenden Ansprüche, **dadurch gekennzeichnet, dass** Schritt B wenigstens einen der folgenden Teilschritte aufweist:
a. Schritt B1: Bereitstellen eines mehrteiligen Umformwerkzeugs (2, 3), das in einem zusammengesetzten Zustand eine Kavität zur Aufnahme der Spule (1) bildet, wobei die Kavität vorzugsweise auf die Innenkontur und/oder die Außenkontur der Spule (1) abgestimmt ist, wobei bevorzugt ein Stempel (2) ein Oberteil des Umformwerkzeugs (2, 3) bildet und/oder ein Gesenk (3) ein Unterteil des Umformwerkzeugs (2, 3) bildet.
b. Schritt B2: Anordnen der Spule (1) im Umformwerkzeug (2, 3), vorzugsweise derart, dass die Spule (1) radial innenseitig und/oder radial außenseitig am Umformwerkzeug (2, 3) anliegt, wobei bevorzugt die Spule (1) radial innenseitig am Stempel (2) anliegt und/oder radial außenseitig am Gesenk (3) anliegt.
c. Schritt B3: Bewegen wenigstens zweier Teile des mehrteiligen Umformwerkzeugs (2, 3) relativ zueinander entlang der Spulenachse (A) unter Verringerung des Volumens der Kavität, wobei vorzugsweise der Stempel (2) entlang der Spulenachse (A) in das Gesenk (3) einfährt.
d. Schritt B4: Umformen der Spule (1) durch Stauchen der Spule (1) entlang der Spulenachse (A), wobei vorzugsweise die Windungen der Spule (1) radial innenseitig beginnend gegeneinander gedrückt werden, sodass das Spulenmaterial bezüglich der Spulenachse (A) in radialer Richtung (R) nach außen verdrängt wird, bevorzugt derart, dass die Zwischenräume zwischen den Windungen verringert oder eliminiert werden.
e. Schritt B5: Veränderung des Querschnitts (Q, Q') der wenigstens einen Windung, vorzugsweise während des Schrittes B4, sodass sich ein Winkel (α), den die Oberseite und/oder die Unterseite des Querschnitts (Q, Q') mit einer die Spulenachse (A) senkrecht schneidenden Ebene (E) einschließt, um wenigstens 1°; 1.5°, 2°, 2.5°, 3°, 4° oder 5° gegenüber dem unverformten Zustand verändert und/oder verringert.
f. Schritt B6: Abtrennen eines Angusses der Spule (1).
g. Schritt B7: Formen wenigstens eines Anschlussbereichs für eine elektrische Kontaktierung der Spule (1), vorzugsweise durch Prägung.
h. Schritt B8: Kalibrieren der Spule (1) auf Endkontur, wobei bevorzugt das Umformwerkzeug (2, 3) die Spule (1) radial innenseitig und/oder radial außenseitig und/oder am oberen und/oder unteren axialen Ende bezüglich der Spulenachse (A) kalibriert, wobei besonders bevorzugt der Stempel (2) die Spule (1) radial innenseitig und/oder am oberen axialen Ende kalibriert und/oder das Gesenk (3) die Spule (1) radial außenseitig und/oder am unteren axialen Ende kalibriert.
i. Schritt B9: Elektrische Isolation der wenigstens einen Windung der Spule (1), vorzugsweise durch Eintauchen der Spule (1) in Isolationslack oder durch Beschichtung oder durch Ummantelung mit einer Isolationsschicht.

4. Verfahren nach einem der vorangehenden Ansprüche, **dadurch gekennzeichnet, dass** der Querschnitt (Q, Q') der wenigstens einen Windung der in Schritt A gegossenen Spule (1) polygonal und/oder konisch und/oder trapezförmig, bevorzugt gleichschenklig polygonal und/oder konisch und/oder trapezförmig ist.

5. Verfahren nach einem der vorangehenden Ansprüche, **dadurch gekennzeichnet, dass** ein Winkel (α), den die Oberseite und/oder die Unterseite des Querschnitts (Q, Q') der wenigstens einen Windung der in Schritt A gegossenen Spule (1) mit einer die Spulenachse (A) senkrecht schneidenden Ebene (E) einschließt, wenigstens 1°; 1.5°, 2°, 2.5°, 3°, 4° oder 5° beträgt.

6. Verfahren nach einem der vorangehenden Ansprüche, **dadurch gekennzeichnet, dass** die Innenkontur und/oder die Außenkontur der nach Schritt A und/oder nach Schritt B erhaltenen Spule (1) der Mantelfläche eines Zylinders, Quaders, Kegelstumpfs oder Pyramidenstumpfs entspricht/entsprechen.

7. Verfahren nach einem der vorangehenden Ansprüche, **dadurch gekennzeichnet, dass** die elektrotechnische Spule (1) in Schritt B derart umgeformt wird, dass sie wenigstens 95% des Volumens eines Körpers mit gleicher Innen- und Außenkontur einnimmt.

8. Verfahren nach einem der vorangehenden Ansprüche, **dadurch gekennzeichnet, dass** der Flächenschwerpunkt (FS, FS') des Querschnitts (Q, Q') der wenigstens einen Windung in Schritt B in radialer Richtung (R) nach innen oder nach außen bezüglich der Spulenachse (A) verlagert wird.

## Claims

1. Method for producing an electrotechnical coil (1), comprising the steps:
a. Step A: casting an electrotechnical coil (1) with at least one winding which runs about a coil axis, wherein the cross-section (Q, Q') of the at least one winding tapers inwards or outwards in the radial direction (R) with respect to the coil axis (A);
b. Step B: shaping the coil (1), thereby changing the cross-section (Q, Q') of the at least one winding, such that the center of area (FS, FS') of the cross-section (Q, Q') of the at least one winding is displaced at least partly in the radial direction (R) relative to the coil axis (A).

2. Method according to claim 1, **characterized in that** step A comprises at least one of the following sub-steps:
a. Step A1: providing a preferably reusable negative mold, preferably by embedding a positive model in an embedding medium, for example of sand or of metallic material, wherein the positive model is particularly preferably removed again after an impression in the embedding medium or remains as a lost mold in the embedding medium.
b. Step A2: casting the coil material into the negative mold, preferably supported by gravitation and/or pressure, preferably when the negative mold is subjected to negative pressure and/or in a protective gas atmosphere, particularly preferably in precision casting, centrifugal casting, vacuum casting or low-pressure casting.
c. Step A3: curing the cast coil material in the negative mold.
d. Step A4: removing the coil (1) from the negative mold.
e. Step A5: cleaning the coil (1).
f. Step A6: soft annealing the coil (1).
g. Step A7: electrically insulating the at least one winding of the coil (1), preferably by immersing the coil (1) in insulation varnish or by coating or sheathing it with an insulation layer.

3. Method according to one of the preceding claims, **characterized in that** step B comprises at least one of the following sub-steps:
a. Step B1: providing a multi-part shaping tool (2, 3) which, in a composite state, forms a cavity for receiving the coil (1), wherein the cavity is preferably matched to the inner contour and/or the outer contour of the coil (1), wherein preferably a punch (2) forms an upper part of the shaping tool (2, 3) and/or a die (3) forms a lower part of the shaping tool (2, 3).
b. Step B2: arranging the coil (1) in the shaping tool (2, 3), preferably in such a way that the coil (1) bears radially on the inside and/or radially on the outside against the shaping tool (2, 3), wherein preferably the coil (1) bears radially on the inside against the punch (2) and/or bears radially on the outside against the die (3).
c. Step B3: moving at least two parts of the multi-part shaping tool (2, 3) relative to one another along the coil axis (A) while reducing the volume of the cavity, wherein preferably the punch (2) enters the die (3) along the coil axis (A).
d. Step B4: shaping the coil (1) by compressing the coil (1) along the coil axis (A), wherein preferably the windings of the coil (1) are pressed against one another starting radially on the inside, so that the coil material is displaced outwards in the radial direction (R) with respect to the coil axis (A), preferably in such a way that the gaps between the windings are reduced or eliminated.
e. Step B5: changing the cross-section (Q, Q') of the at least one winding, preferably during step B4, so that an angle (a) which the upper side and/or the lower side of the cross-section (Q, Q') encloses with a plane (E) intersecting the coil axis (A) perpendicularly changes and/or decreases by at least 1°, 1.5°, 2°, 2.5°, 3°, 4° or 5° with respect to the non-deformed state.
f. Step B6: cutting off a sprue of the coil (1).
g. Step B7: forming at least one connection region for an electrical contacting of the coil (1), preferably by embossing.
h. Step B8: calibrating the coil (1) to final contour, wherein preferably the shaping tool (2, 3) calibrates the coil (1) radially on the inside and/or radially on the outside and/or at the upper and/or lower axial end with respect to the coil axis (A), wherein particularly preferably the punch (2) calibrates the coil (1) radially on the inside and/or at the upper axial end and/or the die (3) calibrates the coil (1) radially on the outside and/or at the lower axial end.
i. Step B9: electrically insulating the at least one winding of the coil (1), preferably by immersing the coil (1) in insulation varnish or by coating or by sheathing it with an insulation layer.

4. Method according to one of the preceding claims, **characterized in that** the cross-section (Q, Q') of the at least one winding of the coil (1) cast in step A is polygonal and/or conical and/or trapezoidal, preferably isosceles polygonal and/or conical and/or trapezoidal.

5. Method according to one of the preceding claims, **characterized in that** an angle (a) which the upper side and/or lower side of the cross-section (Q, Q') of the at least one winding of the coil (1) cast in step A encloses with a plane (E) intersecting the coil axis (A) perpendicularly is at least 1°, 1.5°, 2°, 2.5°, 3°, 4° or 5°.

6. Method according to one of the preceding claims, **characterized in that** the inner contour and/or the outer contour of the coil (1) obtained after step A and/or after step B corresponds/correspond to the lateral surface of a cylinder, cuboid, truncated cone or truncated pyramid.

7. Method according to one of the preceding claims, **characterized in that** the electrotechnical coil (1) is shaped in step B so as to occupy at least 95% of the volume of a body having the same inner and outer contour.

8. Method according to one of the preceding claims, **characterized in that** the center of area (FS, FS') of the cross-section (Q, Q') of the at least one winding is displaced in step B in the radial direction (R) inwards or outwards with respect to the coil axis (A).

## Revendications

1. Procédé de fabrication d'une bobine électrotechnique (1), comprenant les étapes ci-dessous :
a. Étape A : moulage d'une bobine électrotechnique (1) avec au moins un enroulement s'étendant autour d'un axe de bobine (A), dans lequel la section transversale (Q, Q') du au moins un enroulement par rapport à l'axe de bobine (A) est effilée vers l'intérieur ou vers l'extérieur dans la direction radiale (R).
b. Étape B : formage de la bobine (1) par modification de la section transversale (Q, Q') du au moins un enroulement, de sorte que le centre de gravité de surface (FS, FS') de la section transversale (Q, Q') du au moins un enroulement par rapport à l'axe de bobine (A) est déplacé au moins partiellement dans la direction radiale (R).

2. Procédé selon la revendication 1, **caractérisé en ce que** l'étape A présente au moins l'une des sous-étapes ci-dessous :
a. Étape A1 : fourniture d'un moule négatif de manière préférée réutilisable, de manière préférée par enfouissement d'un modèle positif dans un milieu d'enfouissement, par exemple en sable ou en un matériau métallique, dans lequel le modèle positif est de manière particulièrement préférée retiré après réalisation d'une empreinte dans le milieu d'enfouissement ou demeure dans le milieu d'enfouissement sous une forme destinée à être perdue.
b. Étape A2 : moulage du matériau de bobine dans le moule négatif, de manière préférée à l'aide de la gravité et/ou d'une pression, de manière préférée en soumettant le moule négatif à une pression négative et/ou à une atmosphère de gaz protecteur, de manière particulièrement préférée dans le cadre d'un moulage à modèle perdu, d'un moulage par centrifugation, d'un moulage sous vide ou d'un moulage basse pression.
c. Étape A3 : durcissement du matériau de bobine moulé dans le moule négatif.
d. Étape A4 : retrait de la bobine (1) hors du moule négatif.
e. Étape A5 : nettoyage de la bobine (1).
f. Étape A6 : recuit d'adoucissement de la bobine (1).
g. Étape A7 : isolation électrique du au moins un enroulement de la bobine (1), de manière préférée par immersion de la bobine (1) dans un vernis isolant ou par enduction ou gainage avec une couche isolante.

3. Procédé selon l'une quelconque des revendications précédentes, **caractérisé en ce que** l'étape B présente au moins l'une des sous-étapes ci-dessous :
a. Étape B1 : fourniture d'un outil de formage (2, 3) en plusieurs parties, qui, dans un état assemblé, forme une cavité permettant de recevoir la bobine (1), dans lequel la cavité est de manière préférée adaptée au contour intérieur et/ou au contour extérieur de la bobine (1), dans lequel, de manière préférée, un poinçon (2) forme une partie supérieure de l'outil de formage (2, 3) et/ou un matrice (3) forme une partie inférieure de l'outil de formage (2, 3).
b. Étape B2 : agencement de la bobine (1) dans l'outil de formage (2, 3), de manière préférée de telle manière que la bobine (1) repose radialement à l'intérieur et/ou radialement à l'extérieur au niveau de l'outil de formage (2, 3), dans lequel, de manière préférée, la bobine (1) repose radialement à l'intérieur au niveau du poinçon (2) et/ou repose radialement à l'extérieur au niveau de la matrice (3).
c. Étape B3 : déplacement des au moins deux parties de l'outil de formage (2, 3) en plusieurs parties l'une ou les unes par rapport à l'autre ou les autres le long de l'axe de bobine (A) avec réduction du volume de la cavité, dans lequel le poinçon (2) rentre de manière préférée dans la matrice (3) le long de l'axe de bobine (A).
d. Étape B4 : formage de la bobine (1) par compression de la bobine (1) le long de l'axe de bobine (A), dans lequel les enroulements de la bobine (1) sont de manière préférée pressés les uns contre les autres en commençant radialement par l'intérieur de sorte que le matériau de la bobine est déplacé par rapport à l'axe de bobine (A) vers l'extérieur dans la direction radiale (R), de manière préférée de telle manière que les espaces entre les enroulements sont réduits ou supprimés.
e. Étape B5 : modification de la section transversale (Q, Q') du au moins un enroulement, de manière préférée pendant l'étape B4, de sorte qu'un angle (a), incluant le haut et/ou le bas de la section transversale (Q, Q') avec un plan (E) coupant de manière perpendiculaire l'axe de bobine (A), se modifie et/ou se réduit à au moins 1°; 1,5°, 2°, 2,5°, 3°, 4° ou 5° par rapport à l'état non formé.
f. Étape B6 : séparation d'un culot de la bobine (1).
g. Étape B7 : formage d'au moins une région de raccordement destinée à une mise en contact électrique de la bobine (1), de manière préférée par estampage.
h. Étape B8 : calibrage de la bobine (1) sur le contour final, dans lequel, de manière préférée, l'outil de formage (2, 3) calibre la bobine (1) radialement à l'intérieur et/ou radialement à l'extérieur et/ou au niveau de l'extrémité axiale supérieure et/ou inférieure par rapport à l'axe de bobine (A), dans lequel, de manière particulièrement préférée, le poinçon (2) calibre la bobine (1) radialement à l'intérieur et/ou au niveau de l'extrémité axiale supérieure et/ou la matrice (3) calibre la bobine (1) radialement à l'extérieur et/ou au niveau de l'extrémité axiale inférieure.
i. Étape B9 : isolation électrique du au moins un enroulement de la bobine (1), de manière préférée par immersion de la bobine (1) dans un vernis isolant ou par enduction ou gainage avec une couche isolante.

4. Procédé selon l'une quelconque des revendications précédentes, **caractérisé en ce que** la section transversale (Q, Q') du au moins un enroulement de la bobine (1) moulée à l'étape A est polygonale et/ou conique et/ou trapézoïdale, de manière préférée polygonale isocèle et/ou conique isocèle et/ou trapézoïdale isocèle.

5. Procédé selon l'une quelconque des revendications précédentes, **caractérisé en ce qu'**un angle (a), incluant le haut et/ou le bas de la section transversale (Q, Q') du au moins un enroulement de la bobine (1) moulée à l'étape A avec un plan (E) coupant de manière perpendiculaire l'axe de bobine (A), est d'au moins 1°; 1,5°, 2°, 2,5°, 3°, 4° ou 5°.

6. Procédé selon l'une quelconque des revendications précédentes, **caractérisé en ce que** le contour intérieur et/ou le contour extérieur de la bobine (1) obtenue après l'étape A et/ou après l'étape B correspond(ent) à la surface extérieure d'un cylindre, d'un parallélépipède rectangle, d'un tronc de cône ou d'un tronc de pyramide.

7. Procédé selon l'une quelconque des revendications précédentes, **caractérisé en ce que** la bobine électrotechnique (1) est formée à l'étape B de telle manière qu'elle occupe au moins 95 % du volume d'un corps de mêmes contours intérieur et extérieur.

8. Procédé selon l'une quelconque des revendications précédentes, **caractérisé en ce que** le centre de gravité de surface (FS, FS') de la section transversale (Q, Q') du au moins un enroulement est déplacé à l'étape B dans la direction radiale (R) vers l'intérieur ou vers l'extérieur par rapport à l'axe de bobine (A).
